# EUROPÄISCHE PATENTSCHRIFT

(11) **EP 1 154 908 B1**
(45) Veröffentlichungstag und Bekanntmachung des Hinweises auf die Patenterteilung: **01.03.2006**
(21) Anmeldenummer: 00990576.1
(22) Anmeldetag: 21.12.2000
(51) Int. Cl.: B60G 9/00, B60G 21/05

(54) **ACHSAUFHÄNGUNG FÜR STARRACHSEN VON FAHRZEUGEN**
AXLE SUSPENSION FOR RIGID AXLES OF VEHICLES
SUSPENSION POUR ESSIEU RIGIDE DE VEHICULE

(30) Priorität: 22.12.1999 DE 19962406
(43) Veröffentlichungstag der Anmeldung: 21.11.2001
(73) Patentinhaber: ZF Lemförder Metallwaren AG, 49441 Lemförde (DE)
(72) Erfinder: BUHL, Reinhard, 49163 Bohmte (DE); BUBLIES, Holger, 49078 Osnabrück (DE); COSSMANN, Uwe, 49545 Tecklenburg (DE); RICHTER, Reinhard, 49163 Bohmte (DE); SCHMUDDE, Werner, 49593 Bersenbrück (DE)
(86) Internationale Anmeldenummer: PCT/DE2000/004621
(87) Internationale Veröffentlichungsnummer: WO 2001/045972

(56) Entgegenhaltungen:
- EP-A- 0 430 368
- DE-A- 2 505 124
- DE-A- 19 519 694
- DE-A- 19 521 874
- GB-A- 1 382 215

## Beschreibung

Die Erfindung betrifft eine Achsaufhängung für Starrachsen von Fahrzeugen, insbesondere von luftgefederten Nutzfahrzeugen.

Achsaufhängungen, die einen Vierpunktlenker enthalten, sind beispielsweise aus der DE 195 21 874 A1 bekannt. Die konstruktive Ausgestaltung derartiger Achsaufhängungen ist prinzipiell einfach, raum- und kostensparend und hat sich in der Praxis durchweg bewährt. Allerdings hat diese Achsaufhängung, wie auch andere aus dem Stand der Technik bekannte Bauarten, den Nachteil, dass zahlreiche Bauteile zur Achsführung erforderlich sind, was einen erhöhten Montageaufwand erfordert und zudem das Gesamtgewicht des Fahrzeuges negativ beeinflußt. Ferner sind bekannte Achsaufhängungen teilweise kinematisch überbestimmt. Dies wiederum führt zu einem in bestimmten Situationen undefinierten Ablauf der kinematischen Vorgänge innerhalb der Achskonstruktion, was sich unter Umständen negativ auf die Fahrwerkabstimmung bzw. die Fahrwerkdynamik in vertikaler und seitlicher Richtung auswirkt.

Die GB-A- 1,382,215 betrifft eine Achsaufhängung für Starachsen von Fahrzeugen, wie sie insbesondere bei luftgefederten Nutzfahrzeugen einsetzbar ist, mit einem unterhalb der Fahrzeugachse über jeweils zwei in Fahrzeugquerrichtung beabstandet zueinander angeordneten Gelenken einerseits mit der Fahrzeugachse und andererseits mit dem Fahrzeugaufbau verbundenen, verwindbaren, an vier Punkten befestigten, rahmenartigen Stabilisator in der Art eines Vierpunktlenkers, sowie jeweils mindestens einer Federbaueinheit je Fahrzeugseite, die sich zur Federung zwischen Fahrzeugachse und Fahrzeugaufbau befindet. Etwa fahrzeugmittig erstreckt sich in Fahrzeuglängsrichtung eine die Fahrzeugachse mit dem Fahrzeugaufbau vertikal beweglich verbindende Achsstrebe zur Achsführung.

Aus der EP-A- 0 430 368 geht eine Achsaufhängung für Starachsen von Fahrzeugen hervor, wie sie insbesondere bei luftgefederten Nutzfahrzeugen einsetzbar ist. Diese weist eine Fahrzeugachse und einen Vierpunktlenker auf, der über beidseitig zwei in Fahrzeugquerrichtung beabstandet zueinander angeordnete Gelenke verfügt. Ferner ist je Fahrzeugseite eine Federbaueinheit vorhanden, die zur Federung zwischen an der Fahrzeugachse angebrachten Längsträgern und dem Fahrzeugaufbau angeordnet ist. Darüber hinaus offenbart die EP-A- 0 430 368 eine etwa fahrzeugmittig sich in Fahrzeuglängsrichtung erstreckende, die Fahrzeugachse mit dem Fahrzeugaufbau vertikal beweglich verbindende Achsstrebe zur Achsführung. Der Vierpunktlenker ist über Längsträger, die auf beiden Fahrzeugseiten vorhanden sind, mittelbar an der Fahrzeugachse angebracht und über als Hydraulikzylinder ausgeführte Verbindungsstücke mit dem Fahrzeugaufbau verbunden.

Technische Problemstellung der vorliegenden Erfindung ist es, eine Achsaufhängung so weiterzuentwickeln, dass die kinematischen Verhältnisse insgesamt verbessert werden, um die Fahrdynamik zu optimieren. Es soll darüber hinaus die Anzahl der Einzelteile reduziert werden.

Diese Problemstellung wird in Verbindung mit den Merkmalen des Oberbegriffs des Patentanspruchs 1 dadurch gelöst, dass der Vierpunktlenker oberhalb der Fahrzeugachse unmittelbar über jeweils zwei in Fahrzeugquerrichtung beabstandet zueinander angeordnete Gelenke einerseits mit der Fahrzeugachse und andererseits mit dem Fahrzeugaufbau verbunden und im Wesentlichen als Kreuz ausgebildet ist.

Die Besonderheit einer derartigen Achsaufhängung ist darin zu sehen, dass nur eine etwa fahrzeugmittig sich in Fahrzeuglängsrichtung erstreckende, die Fahrzeugachse mit dem Fahrzeugaufbau vertikal beweglich verbindende Achsstrebe zur Achsführung zum Einsatz kommt. Die Achsstrebe ist dabei auf der dem Vierpunktlenker gegenüberliegenden Seite der Fahrzeugachse angebracht. Selbstverständlich liegt es im Bereich der Erfindung, die Anbringung von Vierpunktlenker und Achsstrebe in umgekehrter Anordnung vorzusehen. Durch eine derartige Ausführung werden die kinematischen Verhältnisse der Achsaufhängung vereinfacht und optimiert. Die Anzahl der Bauteile reduziert sich erheblich, sodass die Achskonstruktion insgesamt kostengünstiger ist, als bislang bekannte Ausführungen.

Spezielle Ausgestaltungen des Gegenstandes der Erfindung ergeben sich darüber hinaus aus den Merkmalen der Unteransprüche.

So sind erfindungsgemäß die Federbaueinheiten bzw. die Stoßdämpfer auf Längsträgern montiert, die ihrerseits eine Verbindung zur Fahrzeugachse aufweisen, sodass eine mittelbare Verbindung zwischen der Fahrzeugachse und dem Fahrzeugaufbau besteht. Es hat sich insbesondere als vorteilhaft herausgestellt, wenn jeder Längsträger mindestens eine Aufnahme für die Federbaueinheiten oder Stoßdämpfer aufweist. Die Längsträger sind dabei je Fahrzeugseite etwa in Fahrzeuglängsrichtung verlaufend angeordnet und können eine oder mehrere Federbaueinheiten sowie im Bedarfsfall auch Stoßdämpfer aufnehmen. Zur Anbringung der Federbaueinheiten bzw. der Stoßdämpfer können die Aufnahmen als Gelenke ausgeführt sein, wofür gemäß eine besonderen Ausgestaltung der Erfindung auch Kugelgelenke zum Einsatz kommen können. Letztgenannte haben den Vorteil einer leicht beweglichen Aufnahme der entsprechenden Baueinheiten, sodass beispielsweise bei Verwendung von Luftfedern die Luftfederbälge nur in einem äußerst geringen Umfang belastet werden.

Bestandteil des Fahrzeugaufbaus sind erfindungsgemäß wenigstens zwei parallele Längsrahmen, die etwa in Fahrzeugquerrichtung durch beabstandet zueinander angeordnete Querträger miteinander verbunden werden.

Die sich etwa fahrzeugmittig in Fahrzeuglängsrichtung erstreckende, die Fahrzeugachse mit dem Fahrzeugaufbau vertikal beweglich verbindende Achsstrebe zur Achsführung kann entsprechend einer weiteren Ausgestaltung der Erfindung mittels eines Trägerbrackets mit einem der Querträger verbunden sein. Als Trägerbracket ist dabei ganz allgemein eine Aufnahmevorrichiung zu verstehen, die einerseits ein Molekulargelenk der Achsstrebe aufnimmt und andererseits an dem Fahrzeugaufbau festgelegt ist. Die Achsstrebe weist vorzugsweise an jedem ihrer Enden ein Molekulargelenk auf.

Um eine optimale Federung der Fahrzeugachse zu erreichen kann bei einer erfindungsgemäßen Achsaufhängung die Federbaueinheit vor oder hinter der Fahrzeugachse oder vor und hinter der Fahrzeugachse angeordnet sein.

Im folgenden werden Ausführungsbeispiele des Gegenstandes der Erfindung anhand der beigefügten Zeichnungen näher erläutert. Es zeigen:
- Figur 1:: eine perspektivische Ansicht eines Ausführungsbeispieles der erfindungsgemäßen Achsaufhängung von schräg vorn, also entgegen der Fahrtrichtung des Fahrzeuges gesehen,
- Figur 2:: eine perspektivische Ansicht von schräg hinten, also in Fahrtrichtung des Fahrzeuges gesehen,
- Figur 3:: eine Seitenansicht der erfindungsgemäßen Achsaufhängung ohne das in Fahrzeugrichtung rechte Fahrzeugrad,
- Figur 4:: ein für die erfindungsgemäße Achsaufhängung verwendetes Molekulargelenk in Schnittdarstellung und
- Figur 5:: eine Ansicht von oben auf eine erfindungsgemäße Achsaufhängung.

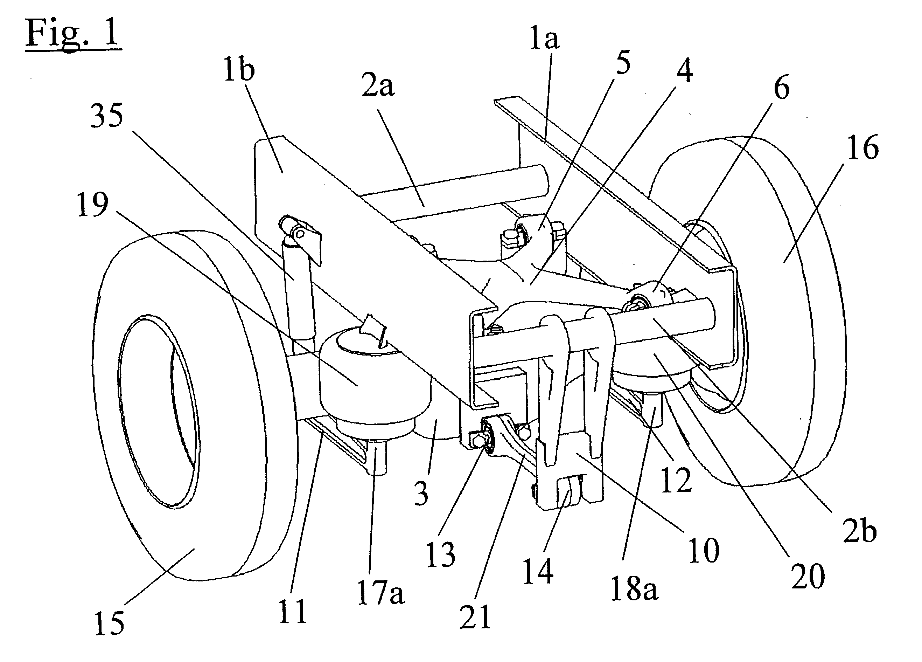

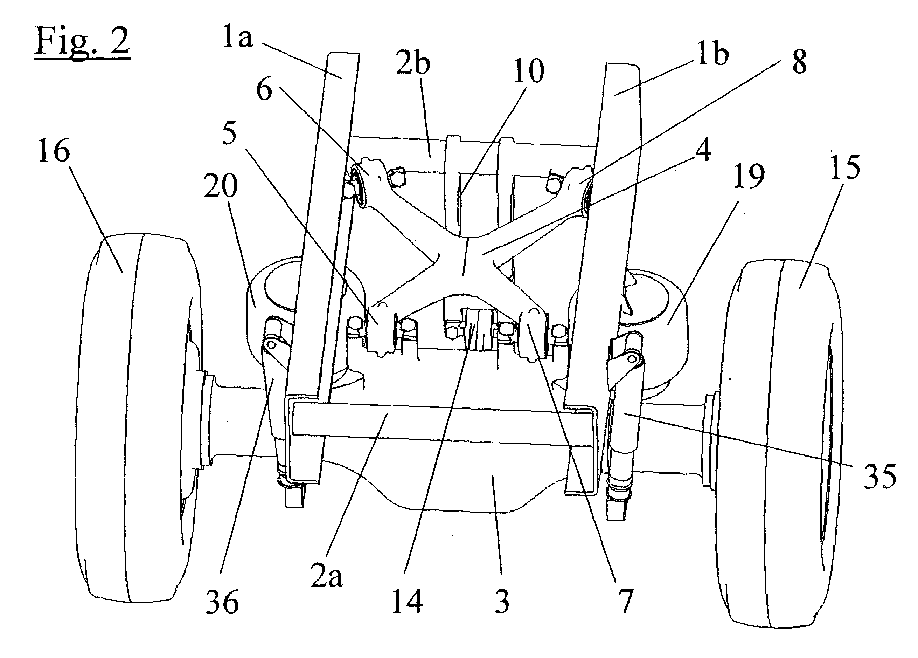

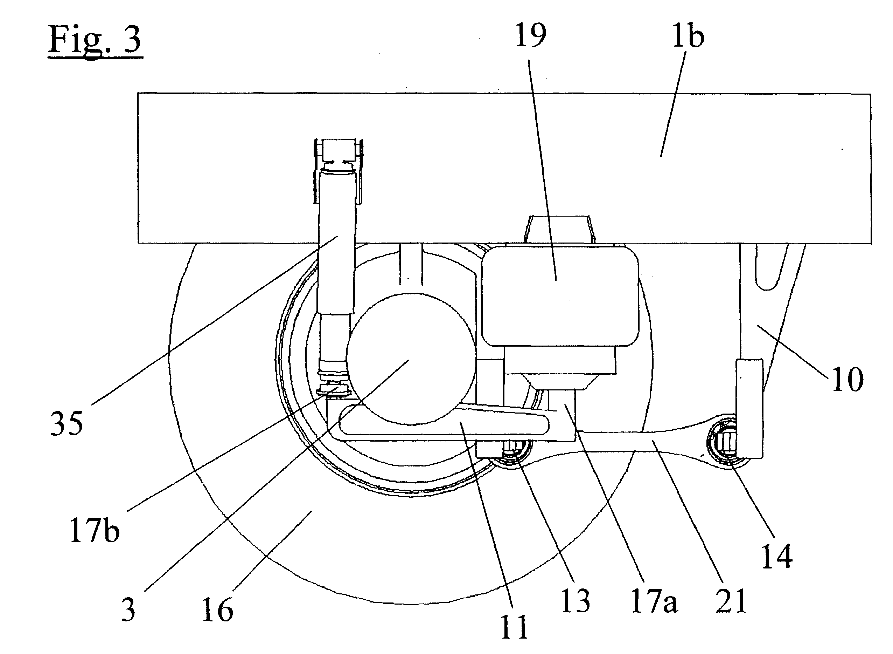

In den Figuren 1 bis 3 ist die erfindungsgemäße Achsaufhängung an einem mit Längsrahmen 1a, 1b versehenen, hier nicht näher gezeigten Nutzfahrzeugfahrgestell dargestellt. Die Längsrahmen 1a und 1b sind seitlich beabstandet zueinander angeordnet und durch die Querträger 2a, 2b fest miteinander verbunden. Die Längsrahmen 1a und 1b und die Querträger 2a, 2b sind Bestandteile des Fahrzeugaufbaus 1, 2. Unterhalb der Längsrahmen 1a und 1b befindet sich die Fahrzeugachse 3, welche mit den Längsrahmen 1a, 1b bzw. einem der Querträger 2b über einen Vierpunktlenker 4 verbunden ist. An der Fahrzeugachse 3 sind ferner die Fahrzeugräder 15 und 16 befestigt. Der Vierpunktlenker 4 weist insgesamt vier Gelenke 5, 6, 7 und 8 auf, wobei jeweils zwei Gelenke 6, 8 wie zuvor beschrieben am Fahrzeugrahmen und zwei Gelenke 5, 7 an der Fahrzeugachse befestigt sind. Die an der Fahrzeugachse und am Fahrzeugrahmen festgelegten Gelenke sind in Fahrzeugquerrichtung beabstandet zueinander angeordnet und als Molekulargelenke ausgeführt.

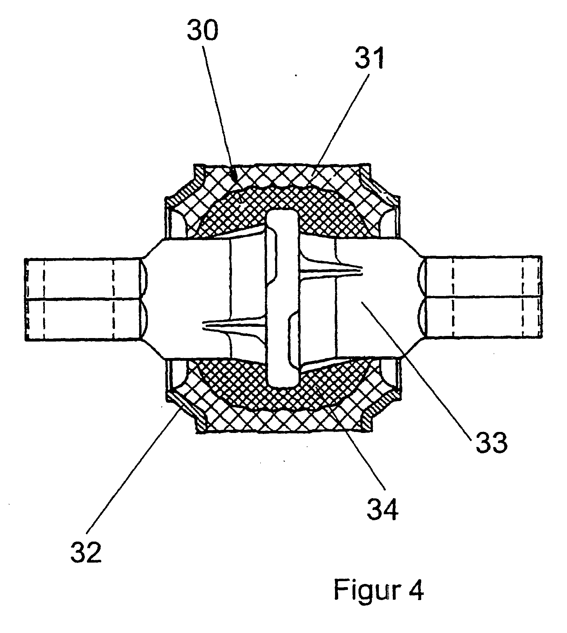

Bei einem Molekulargelenk handelt es sich prinzipiell um ein Gelenk, wie es als Kugelgelenk beispielhaft in der Figur 4 dargestellt ist. Das Molekulargelenk besteht hierbei aus einer innen liegenden Gelenkkugel 30, einem die Gelenkkugel umschließenden Gehäuse 32 sowie einem zwischen Gelenkkugel 30 und Gehäuse 32 angeordneten Elastomer 31. Bei dem Ausführungsbeispiel der Figur 4 ist die Gelenkkugel 30 zweiteilig ausgeführt, wobei sie aus einer inneren metallischen Gelenkachse 33 und einer daran angeformten Außenkugel 34 aus Elastomer besteht. Andere Ausführungen eines Molekulargelenkes können eine Gelenkkugel 30 insgesamt aus Metall vorsehen oder anstelle einer Kugel ein zylindrisches Innenteil aufweisen. Derartige Molekulargelenke können durch die Auswahl des zwischen Gelenkkugel 30 und Gehäuse 32 angeordneten Elastomers den auf das Gelenk einwirkenden Belastungen entsprechend angepasst werden. Darüberhinaus können innerhalb des Elastomer und/oder des Gehäuses bzw. am Innenteil des Gelenkes zumindest bereichsweise Ausnehmungen vorgesehen sein, die eine gezielte Beeinflussung der Gelenkcharakteristik bewirken. So können Molekulargelenke beispielsweise in einer Richtung eine geringere Dämpfung und in wenigstens einer versetzt hierzu gelegenen Richtung eine entsprechend größere Dämpfung aufweisen

Aus den Darstellungen der Figuren 1 bis 3 geht ferner hervor, daß die Fahrzeugachse 3 eine Verbindung zu einem Querträger 2b aufweist, den eine Achsstrebe 21 bildet, die ihrerseits einseitig in einem Trägerbracket 10 aufgenommen ist. Diese Achsstrebe enthält beiderseits je ein Molekulargelenk 13, 14, wobei das Molekulargelenk 13 unterhalb der Fahrzeugachse 3 angelenkt und das Molekulargelenk 14 in dem Trägerbracket 10 aufgenommen ist. Die Molekulargelenke 5, 6, 7, 8, 13 und 14 weisen prinzipiell den zuvor beschriebenen Aufbau auf und ermöglichen sowohl die Aufnahme von Längs- als auch Vertikalkräften und Verwinkelungen (Kardanik), die durch die Bewegungen der Fahrzeugachse 3 hervorgerufen werden. Durch die Verwendung der Molekulargelenke wird eine Überbestimmung der kinematischen Freiheitsgrade verhindert, so daß eine optimalere Vorwärtsabstimmung im Hinblick auf die Fahrwerksdynamik in vertikaler und seitlicher Richtung herbeigeführt werden kann.

Zur mittelbaren Verbindung der Fahrzeugachse mit dem Fahrzeugaufbau 1, 2 wird auf jeder Fahrzeugseite je ein Längsträger 11 bzw. 12 an der Fahrzeugachse 3 befestigt. Diese Längsträger 11, 12 stellen bei der gezeigten Ausführung über je eine Federbaueinheit 19, 20 bzw. je einen Stoßdämpfer 35, 36 die genannte Verbindung zum Fahrzeugaufbau 1, 2 her.

An den Längsträgern 11 und 12 sind jeweils Aufnahmen 17a, 17b und 18a, 18b zur Anbringung der Federbaueinheiten 19, 20 bzw. der Stoßdämpfer 35, 36 vorhanden.

Dies führt zu einer Reduzierung der üblicherweise bei herkömmlichen Achskonstruktionen verwendeten Bauteile und verringert somit Lagerhaltung und Montagezeiten für die erfindungsgemäße Achskonstruktion.

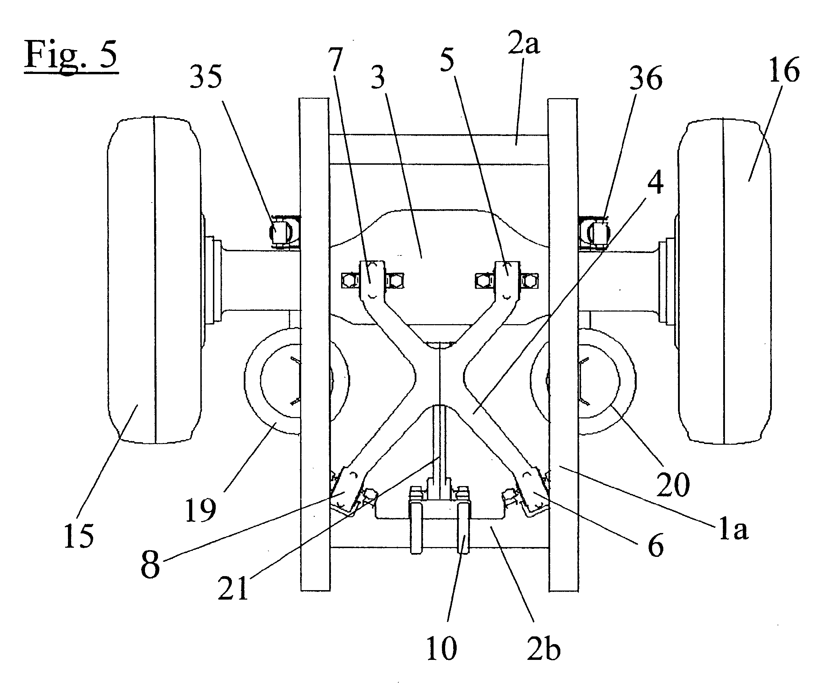

Aus der Draufsicht der Figur 5 eines Ausführungsbeispieles der erfindungsgemäßen Achskonstruktion ist die Lage des Vierpunktlenkers 4 sowie seiner Anlenkpunkte an der Karosserie bzw der Fahrzeugachse 3 ersichtlich.

Natürlich ist es möglich, bei einer erfindungsgemäßen Achsaufhängung statt der dargestellten zwei Federbaueinheiten drei, vier oder mehr derartige Federelemente einzusetzen, beziehungsweise die Federbaueinheiten 19, 20 in Fahrtrichtung gesehen vor oder hinter der Fahrzeugachse 3 anzuordnen.

### Bezugszeichenliste:

- 1a: Längsrahmen
- 1b: Längsrahmen
- 2a: Querträger
- 2b: Querträger
- 3: Fahrzeugachse
- 4: Vierpunktlenker
- 5: Gelenk
- 6: Gelenk
- 7: Gelenk
- 8: Gelenk
- 10: Trägerbracket
- 11: Längsträger
- 12: Längsträger
- 13: Molekulargelenk
- 14: Molekulargelenk
- 15: Fahrzeugrad
- 16: Fahrzeugrad
- 17a: Aufnahme
- 17b: Aufnahme
- 18a: Aufnahme
- 18b: Aufnahme
- 19: Federbaueinheit
- 20: Federbaueinheit
- 21: Achsstrebe
- 30: Gelenkkugel
- 31: Elastomer
- 32: Gehäuse
- 33: Gelenkachse
- 34: Außenkugel
- 35: Stoßdämpfer
- 36: Stoßdämpfer

## Patentansprüche

1. Achsaufhängung für Starrachsen von Fahrzeugen, insbesondere von luftgefederten Nutzfahrzeugen mit:
- einem über jeweils zwei in Fahrzeugquerrichtung beabstandet zueinander angeordnete Gelenke (5, 6, 7, 8) einerseits mit der Fahrzeugachse (3) und andererseits mit dem Fahrzeugaufbau (1, 2) verbundenen, verwindbaren Vierpunktlenker (4),
- jeweils mindestens einer Federbaueinheit (19, 20) je Fahrzeugseite, die sich zur Federung zwischen Fahrzeugachse (3) und Fahrzeugaufbau (1, 2) befindet, und
- einer etwa fahrzeugmittig sich in Fahrzeuglängsrichtung erstreckenden, die Fahrzeugachse (3) mit dem Fahrzeugaufbau (1, 2) vertikal beweglich verbindenden Achsstrebe (21) zur Achsführung,
**dadurch gekennzeichnet, dass**
der Vierpunktlenker (4) oberhalb der Fahrzeugachse (3) unmittelbar über die jeweils zwei in Fahrzeugquerrichtung beabstandet zueinander angeordneten Gelenke (5, 6, 7, 8) einerseits mit der Fahrzeugachse (3) und andererseits mit dem Fahrzeugaufbau (1, 2) verbunden und im Wesentlichen als Kreuz ausgebildet ist.

2. Achsaufhängung nach Anspruch 1,
**dadurch gekennzeichnet, dass**
an der Fahrzeugachse (3) angebrachte Längsträger (11, 12) jeweils mindestens eine Aufnahme (17, 18) für die Federbaueinheiten (19, 20) oder Stoßdämpfer (35, 36) aufweisen.

3. Achsaufhängung nach Anspruch 2,
**dadurch gekennzeichnet, dass**
die Aufnahmen (17, 18) für die Federbaueinheiten (19, 20) oder die Stoßdämpfer (35, 36) als Gelenke gestaltet sind.

4. Achsaufhängung nach Anspruch 3,
**dadurch gekennzeichnet, dass**
die Gelenke Kugelgelenke sind.

5. Achsaufhängung nach einem der vorgenannten Ansprüche,
**dadurch gekennzeichnet, dass**
der Fahrzeugaufbau (1, 2) zwei parallele Längsrahmen (1a, 1b) und diese etwa in Fahrzeugquerrichtung verbindende, beabstandet zueinander angeordnete Querträger (2a, 2b) aufweist.

6. Achsaufhängung nach Anspruch 5,
**dadurch gekennzeichnet, dass**
die beiderseits Molekulargelenke (13, 14) aufweisende Achsstrebe (21) einerseits auf der dem Vierpunktlenker (4) gegenüberliegenden Seite der Fahrzeugachse (3) und andererseits über ein Trägerbracket (10) mit einem Querträger (2a oder 2b) verbunden ist.

7. Achsaufhängung nach einem der vorgenannten Ansprüche,
**dadurch gekennzeichnet, dass**
die Federbaueinheit (19, 20) vor oder hinter der Fahrzeugachse (3) angeordnet ist.

8. Achsaufhängung nach einem der Ansprüche 1 bis 6,
**dadurch gekennzeichnet, dass**
vor und hinter der Fahrzeugachse (3) jeweils eine Federbaueinheit (19, 20) angeordnet ist.

## Claims

1. Axle suspension for rigid axles of vehicles, in particular of commercial vehicles with air suspension, with:
- a torsionally flexible four-point link (4) which is connected via two respective joints (5, 6, 7, 8), which are spaced apart in the transverse direction of the vehicle, on one side to the vehicle axle (3) and on the other to the vehicle body (1, 2),
- at least one respective spring construction unit (19, 20) on each vehicle side, this being located between the vehicle axle (3) and the vehicle body (1, 2) for spring cushioning, and
- an axle strut (21) which extends approximately in the centre of the vehicle in the longitudinal direction thereof and connects the vehicle axle (3) to the vehicle body (1, 2) in a vertically mobile manner to guide the axle,
**characterised in that**
the four-point link (4) is directly connected above the vehicle axle (3) via the two respective joints (5, 6, 7, 8), which are spaced apart in the transverse direction of the vehicle, on one side to the vehicle axle (3) and on the other to the vehicle body (1, 2) and is substantially formed as a cross.

2. Axle suspension according to Claim 1,
**characterised in that**
longitudinal members (11, 12), which are fitted to the vehicle axle (3), in each case comprise at least one mount (17, 18) for the spring construction units (19, 20) or shock absorbers (35, 36).

3. Axle suspension according to Claim 2,
**characterised in that**
the mounts (17, 18) for the spring construction units (19, 20) or the shock absorbers (35, 36) are in the form of joints.

4. Axle suspension according to Claim 3,
**characterised in that**
the joints are ball joints.

5. Axle suspension according to any one of the preceding Claims,
**characterised in that**
the vehicle body (1, 2) comprises two parallel longitudinal frames (1a, 1b) and spaced cross members (2a, 2b) which connect the latter approximately in the transverse direction of the vehicle.

6. Axle suspension according to Claim 5,
**characterised in that**
the axle strut (21), comprising molecular joints (13, 14) on both sides, is connected to a cross member (2a or 2b) on one side on the side of the vehicle axle (3) lying opposite the four-point link (4) and on the other via a member bracket (10).

7. Axle suspension according to any one of the preceding Claims,
**characterised in that**
the spring construction unit (19, 20) is disposed in front of or behind the vehicle axle (3).

8. Axle suspension according to any one of Claims 1 to 6,
**characterised in that**
a respective spring construction unit (19, 20) is disposed in front of and behind the vehicle axle (3).

## Revendications

1. Suspension d'essieux pour essieux rigides de véhicules automobiles, notamment de véhicules utilitaires à suspension pneumatique, comportant:
- un levier articulé apte à se tordre, relié par l'intermédiaire de respectivement deux articulations (5, 6, 7, 8), disposées en étant réciproquement distantes dans la direction transversale du véhicule, d'une part à l'essieu (3) du véhicule et d'autre part à la superstructure (1, 2) du véhicule,
- respectivement au moins un composant à ressort (19, 20) présent de chaque côté du véhicule et prévue pour réaliser la suspension entre l'essieu (3) et la superstructure (1, 2) du véhicule, et
- un bras oscillant (21) utilisé pour le guidage de l'essieu et qui s'étend au centre du véhicule dans la direction longitudinale de ce dernier et relie avec possibilité de déplacement vertical l'essieu (3) du véhicule à la superstructure (1, 2) du véhicule,
**caractérisée en ce que**
le levier articulé en quatre points (4) est relié directement par l'intermédiaire des deux articulations respectives (5, 6, 7, 8) situées à distance l'une de l'autre dans la direction transversale du véhicule, d'une part à l'essieu (3) du véhicule et d'autre part à la superstructure (1, 2) du véhicule et est agencé essentiellement en forme de croix.

2. Suspension d'essieu selon la revendication 1, **caractérisée en ce que** des longerons (11, 12) installés sur l'essieu (3) du véhicule possèdent respectivement au moins un logement (17, 18) pour les composants à ressorts (19, 20) ou les amortisseurs (35, 36).

3. Suspension d'essieu selon la revendication 2, **caractérisée en ce que** les logements (17, 18) pour les composants à ressorts (19, 20) ou les amortisseurs (35, 36) sont agencés sous la forme d'articulations.

4. Suspension d'essieu selon la revendication 3, **caractérisée en ce que** les articulations sont des joints sphériques.

5. Suspension d'essieu selon l'une des revendications précédentes, **caractérisée en ce que** la superstructure (1, 2) du véhicule comporte deux cadres longitudinaux parallèles (1a, 1b) et des traverses (2a, 2b) qui sont disposées à distance l'une de l'autre et relient ces cadres longitudinaux approximativement dans la direction transversale du véhicule.

6. Suspension d'essieu selon la revendication 5, **caractérisée en ce que** le bras oscillant (21), qui comporte des deux côtés des articulations moléculaires (13, 14), est reliée d'une part au côté de l'essieu (3) du véhicule, situé à l'opposé du levier articulé en quatre points (4), et d'autre part, par l'intermédiaire d'une console de support (10), à un support transversal (2a, 2b).

7. Suspension d'essieu selon l'une des revendications précédentes, **caractérisée en ce que** le composant à ressort (19, 20) est disposé en avant ou en arrière de l'essieu (3) du véhicule.

8. Suspension d'essieu selon l'une des revendications 1 à 6, **caractérisée en ce qu'**un composant à ressort (19, 20) est disposé respectivement en avant et en arrière de l'essieu (3) du véhicule.
